# EUROPEAN PATENT APPLICATION

(11) **EP 4 723 067 A1**
(43) Date of publication of application: **08.04.2026**
(21) Application number: 25205570.2
(22) Date of filing: 30.09.2025
(51) Int. Cl.: G07C 5/08

(54) **DATA STORAGE DEVICE, VEHICLE, DATA STORAGE SYSTEM, AND PROGRAM**

(30) Priority: 04.10.2024 JP 2024175024
(71) Applicant: TOYOTA JIDOSHA KABUSHIKI KAISHA, Toyota-shi Aichi 471-8571 (JP)
(72) Inventor: KIKUTA, Tatsuya, TOYOTA-SHI, AICHI, 471-8571 (JP)
(74) Representative: Cabinet Beau de Loménie

(57) **Abstract**

A data storage device includes: a control unit (11) configured to, in response to detection of a predetermined vehicle condition, cause a storage device (7) to store vehicle data corresponding to the vehicle condition; and an acquisition unit (12) configured to acquire environmental information of a periphery of a vehicle, wherein the control unit is configured to: determine a sampling frequency of the vehicle data to be stored in the storage device (7), based on the environmental information acquired by the acquisition unit (12) and a pre-acquired relationship between the environmental information and the sampling frequency of the vehicle data; and cause the storage device (7) to store the vehicle data sampled at the determined sampling frequency.

## Description

### CROSS-REFERENCE TO RELATED APPLICATION

This application is based on Japanese Patent Application No. 2024-175024 filed with the Japan Patent Office on October 4, 2024, the entire contents of which are hereby incorporated by reference and to which the skilled person can refer when considering the present disclosure.

### TECHNICAL FIELD

The present disclosure relates to a data storage device, a vehicle, a data storage system, and a program.

### BACKGROUND

Japanese Unexamined Patent Application Publication No. 2013-073610 discloses a data storage device for a vehicle. This device stores vehicle data in a non-volatile ring buffer in response to detection of a predetermined vehicle condition such as acceleration, deceleration, or lateral acceleration being equal to or greater than a predetermined value. The vehicle data includes detection values of in-vehicle sensors and is used by a vehicle manufacturer or the like to post-analyze a predetermined event.

### SUMMARY

Events to be analyzed include events related to traffic safety. Events related to traffic safety include malfunctions of in-vehicle systems or excessive approaches to surrounding objects. It is assumed that the probability of occurrence of such events increases depending on the environment in which the vehicle travels. However, since the device described in Japanese Unexamined Patent Application Publication No. 2013-073610 stores vehicle data uniformly regardless of the environment in which the vehicle travels, a sufficient amount of data may not be stored when an event to be analyzed occurs. The present disclosure provides a technology capable of adjusting the amount of stored vehicle data according to the environment around the vehicle.

A data storage device according to an aspect of the present disclosure includes: a control unit configured to, in response to detection of a predetermined vehicle condition, cause a storage device to store vehicle data corresponding to the vehicle condition; and an acquisition unit configured to acquire environmental information of a periphery of a vehicle, wherein the control unit is configured to: determine a sampling frequency of the vehicle data to be stored in the storage device, based on the environmental information acquired by the acquisition unit and a pre-acquired relationship between the environmental information and the sampling frequency of the vehicle data; and cause the storage device to store the vehicle data sampled at the determined sampling frequency.

In this data storage device, environmental information of the periphery of the vehicle is acquired. Then, a sampling frequency of the vehicle data to be stored in the storage device is determined based on the acquired environmental information and the pre-acquired relationship between the environmental information and the sampling frequency. Then, in response to detection of a predetermined vehicle condition, the vehicle data sampled at the determined sampling frequency is stored in the storage device. As described above, since the data storage device can change the sampling frequency of the vehicle data according to the environmental information, the amount of stored vehicle data can be adjusted according to the environment around the vehicle.

In one embodiment, the environmental information may include at least one of an amount of rainfall, an amount of snowfall, an amount of sunlight, an intensity of glare, and a degree of road surface freezing, and the pre-acquired relationship between the environmental information and the sampling frequency of the vehicle data may be a relationship in which the sampling frequency of the vehicle data increases as the environmental information becomes larger. In this case, the data storage device can increase the amount of stored vehicle data as the environment becomes more detrimental to the travel and driving of the vehicle, that is, as the situation becomes more likely for the driver to encounter an unsafe event. Therefore, the data storage device can improve event analyzability compared to a device that stores vehicle data uniformly.

In one embodiment, the environmental information may include at least one of an amount of rainfall, an amount of snowfall, an amount of sunlight, an intensity of glare, and a degree of road surface freezing, and the pre-acquired relationship between the environmental information and the sampling frequency of the vehicle data may be a relationship in which the sampling frequency of the vehicle data increases stepwise according to a magnitude of the environmental information. In this case, the data storage device can increase the amount of stored vehicle data stepwise as the environment becomes more detrimental to the travel and driving of the vehicle, that is, as the situation becomes more likely for the driver to encounter an unsafe event. Therefore, the data storage device can improve event analyzability compared to a device that acquires vehicle data uniformly.

In one embodiment, the control unit may set an upper limit for the sampling frequency of the vehicle data. Increasing the amount of vehicle data according to the environmental information may lead to insufficient capacity of the storage device. By setting an upper limit for the sampling frequency, the data storage device can avoid unexpected pressure on the capacity of the storage device.

In one embodiment, the vehicle data may include image data, and the control unit may be further configured to: determine a number of pixels of the image data to be stored in the storage device, based on the environmental information acquired by the acquisition unit and a pre-acquired relationship between the environmental information and the number of pixels of the image data; and cause the storage device to store the image data converted to the determined number of pixels. Since the data storage device can change the number of pixels of the image data according to the environmental information, it can adjust the amount of image data to be stored according to the environment around the vehicle.

In one embodiment, the control unit may be further configured to: set an allowable number of storage operations for a predetermined period for each type of the vehicle condition; in response to detection of the vehicle condition, cause the storage device to store the vehicle data when a number of storage operations related to the vehicle condition is less than the allowable number of storage operations, and not cause the storage device to store the vehicle data when the number of storage operations related to the vehicle condition is greater than or equal to the allowable number of storage operations; acquire an actual result value of the number of storage operations in the predetermined period; and modify the allowable number of storage operations so as to approach the actual result value. The data storage device can modify the allowable number of storage operations for vehicle data to be stored for post-analysis in line with actual results, thereby avoiding unexpected pressure on the capacity of the storage device.

A vehicle according to another aspect of the present disclosure includes: a control unit configured to, in response to detection of a predetermined vehicle condition, cause a storage device to store vehicle data corresponding to the vehicle condition; and an acquisition unit configured to acquire environmental information of a periphery of the vehicle, wherein the control unit is configured to: determine a sampling frequency of the vehicle data to be stored in the storage device, based on the environmental information acquired by the acquisition unit and a pre-acquired relationship between the environmental information and the sampling frequency of the vehicle data; and cause the storage device to store the vehicle data sampled at the determined sampling frequency. This vehicle provides the same effects as the data storage device described above.

A data storage system according to another aspect of the present disclosure includes: a control unit configured to, in response to detection of a predetermined vehicle condition, cause a storage device to store vehicle data corresponding to the vehicle condition; and an acquisition unit configured to acquire environmental information of a periphery of a vehicle, wherein the control unit is configured to: determine a sampling frequency of the vehicle data to be stored in the storage device, based on the environmental information acquired by the acquisition unit and a pre-acquired relationship between the environmental information and the sampling frequency of the vehicle data; and cause the storage device to store the vehicle data sampled at the determined sampling frequency. This data storage system provides the same effects as the data storage device described above.

A program according to another aspect of the present disclosure is a program executed by a control unit in a data storage device, the data storage device including: the control unit configured to, in response to detection of a predetermined vehicle condition, cause a storage device to store vehicle data corresponding to the vehicle condition; and an acquisition unit configured to acquire environmental information of a periphery of a vehicle, the program causing the control unit to realize: a function of determining a sampling frequency of the vehicle data to be stored in the storage device, based on the environmental information acquired by the acquisition unit and a pre-acquired relationship between the environmental information and the sampling frequency of the vehicle data; and a function of causing the storage device to store the vehicle data sampled at the determined sampling frequency. This program provides the same effects as the data storage device described above.

According to the present disclosure, a technology is provided that can adjust the amount of stored vehicle data according to the environment around the vehicle.

### BRIEF DESCRIPTION OF THE DRAWINGS

FIG. 1 is a block diagram showing an example of a configuration of a vehicle equipped with a data storage device according to an embodiment.
FIG. 2 is a graph showing a relationship between a sampling frequency of vehicle data and an estimated hourly rainfall, and a relationship between an assumed number of occurrences of a predetermined event and the estimated hourly rainfall.
FIG. 3A is a graph showing a relationship between an amount of data acquired at a first sampling frequency and time, and FIG. 3B is a graph showing a relationship between an amount of data acquired at a second sampling frequency, which is higher than the first sampling frequency, and time.
FIG. 4A is a flowchart showing an operation in which the data storage device determines the sampling frequency of the vehicle data, and FIG. 4B is a flowchart showing an operation in which the data storage device stores the vehicle data.
FIG. 5 is a graph showing a relationship between a number of pixels of image data and an estimated hourly rainfall, and a relationship between an assumed number of occurrences of a predetermined event and the estimated hourly rainfall.
FIG. 6 is a table showing a relationship between a type of vehicle condition and an allowable number of storage operations.
FIG. 7 is a flowchart showing an operation for changing the allowable number of storage operations.
FIG. 8 is a block diagram showing an example of a configuration of a data storage system according to an embodiment.

### DETAILED DESCRIPTION

Hereinafter, embodiments of the present disclosure will be described in detail with reference to the drawings. In the description of the drawings, the same reference numerals are given to the same elements, and redundant explanations are not repeated.

### [Configuration of Vehicle]

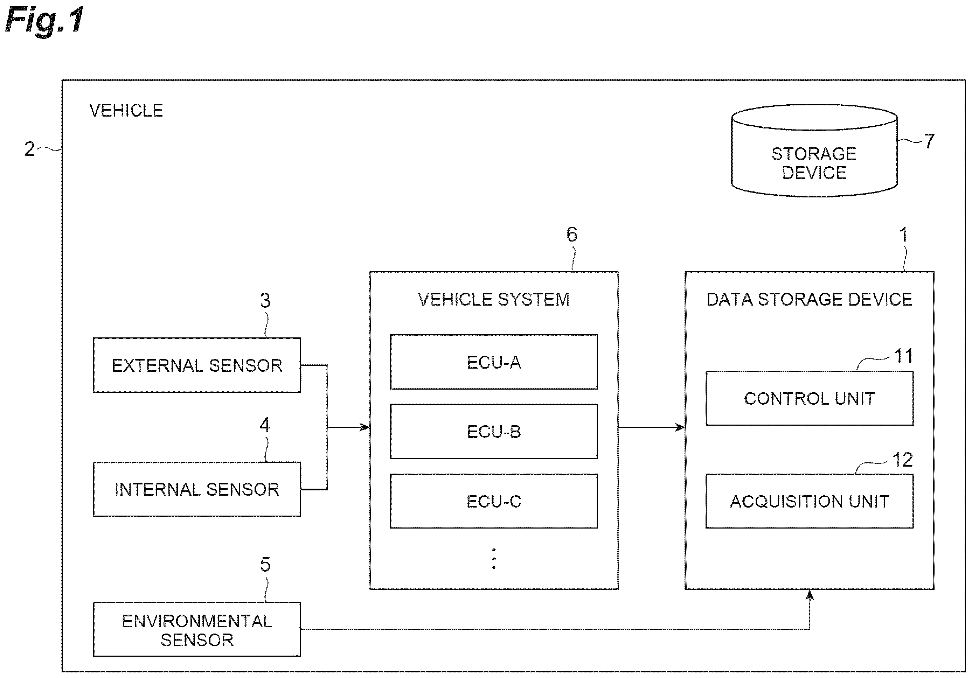

FIG. 1 is a block diagram showing an example of a configuration of a vehicle equipped with a data storage device according to an embodiment. As shown in FIG. 1, a data storage device 1 is mounted on a vehicle 2 as an example. The data storage device 1 is a device that causes a recording medium to store data such as detection values of in-vehicle sensors for a vehicle manufacturer or the like to post-analyze a predetermined event. The vehicle 2 may be a vehicle driven by a driver or an autonomous vehicle.

The vehicle 2 includes an external sensor 3, an internal sensor 4, an environmental sensor 5, a vehicle system 6, and a storage device 7.

The external sensor 3 is a detection device that detects a situation around the vehicle 2. The surrounding situation includes other vehicles, pedestrians, obstacles, lane markings on the road, a lighting state of traffic lights, and the like around the vehicle 2. The external sensor 3 includes at least one of a camera and a radar sensor. The camera is an imaging device that captures an external situation of the vehicle 2. The camera is provided, for example, on a back side of a windshield of the vehicle 2 and captures a front view of the vehicle 2. A plurality of cameras may be provided to capture side and rear views of the vehicle 2. The radar sensor is a detection device that detects an object around the vehicle 2 using radio waves such as millimeter waves or light. The radar sensor includes, for example, a millimeter-wave radar or a LiDAR (Light Detection and Ranging).

The internal sensor 4 is a detection device that detects a state of the vehicle 2. The internal sensor 4 detects a traveling state of the vehicle 2 as the state of thereof. The traveling state includes the behavior of the vehicle. The internal sensor 4 is a sensor that detects the traveling state of the vehicle 2 and includes, for example, a vehicle speed sensor, an acceleration sensor, and a yaw rate sensor. The vehicle speed sensor is a detection device that detects the speed of the vehicle 2. As the vehicle speed sensor, a wheel speed sensor provided for wheels of the vehicle 2 or drive shafts that rotate integrally with the wheels, or the like, and that detects the rotational speed of each wheel can be used.

The acceleration sensor is a detection device that detects acceleration of the vehicle 2. The acceleration sensor includes, for example, a longitudinal acceleration sensor that detects the longitudinal acceleration of the vehicle 2. The acceleration sensor may include a lateral acceleration sensor that detects a lateral acceleration of the vehicle 2. The yaw rate sensor is a detection device that detects a yaw rate (rotational angular velocity) around the vertical axis of the center of gravity of the vehicle 2. As a yaw rate sensor, for example, a gyro sensor can be used.

Further, the internal sensor 4 detects a driving operation of the vehicle 2 by the driver as a state of the vehicle 2. The internal sensor 4 includes, for example, a steering sensor, an accelerator sensor, and a brake sensor as sensors for detecting the driving operation of the vehicle 2 by the driver.

The steering sensor detects an operation amount of a steering wheel by the driver. The operation amount of a steering unit includes a steering angle. The operation amount of the steering unit may also include a steering torque. The accelerator sensor detects an operation amount of an accelerator pedal by the driver. The operation amount of the accelerator pedal includes, for example, a depression amount of the accelerator pedal. The brake sensor detects an operation amount of a brake pedal by the driver. The operation amount of the brake pedal includes, for example, a depression amount of the brake pedal. The brake sensor may detect a master cylinder pressure of a hydraulic brake system.

The environmental sensor 5 is a detection device that detects environmental information of a periphery of the vehicle 2. The environmental information is, for example, climate information or road surface information, and includes, as an example, at least one of an amount of rainfall, an amount of snowfall, an amount of sunlight, an intensity of glare, and a degree of road surface freezing. The environmental sensor 5 includes, for example, at least one of a rainfall sensor, a snowfall sensor, a sunlight sensor, and a temperature sensor.

The vehicle system 6 is an in-vehicle system that assists driving of the vehicle 2. The vehicle system 6 may be, for example, an Advanced Driver-Assistance System (ADAS). The driving assistance provided by the vehicle system 6 may be a state in which driving operations including a brake operation, an accelerator operation, and a steering operation are partially automated, a state in which all driving tasks are automated on the condition that a preset traveling condition is met, or a state in which all driving tasks are automated without any condition setting.

The driving assistance includes, for example, a lane keeping function, an inter-vehicle distance control function, a start function, a stop function, a lane change function, a right/left turn function, a collision warning function, a collision mitigation function, a parking function, a pedestrian detection function, and the like. The vehicle system 6 includes several ECUs (Electronic Control Units) to realize these functions. An ECU is an electronic control unit having a CPU (Central Processing Unit), a ROM (Read Only Memory), a RAM (Random Access Memory), a CAN (Controller Area Network) communication circuit, and the like.

The ECUs include, for example, a meter ECU, a body ECU, a navigation ECU, a communication control ECU, an engine ECU, a brake ECU, a power steering ECU, an airbag ECU, a transmission ECU, and the like.

The meter ECU has a function of displaying an operation state of switches or signals acquired from other ECUs (vehicle speed, engine speed, door lock state, etc.). The body ECU detects ON/OFF of a courtesy switch and controls an interior light, door lock/unlock, or the like. The navigation ECU detects position information of the vehicle using GNSS (Global Navigation Satellite Systems) or the like, displays a map and the own vehicle position, and also has route guidance and audio-visual functions. The communication control ECU connects to a wireless communication network such as a mobile phone network or a wireless LAN (Local Area Network) and can transmit part or all of the vehicle data to an external server by communicating with the external server. The engine ECU controls a throttle opening, a fuel injection amount, and an ignition timing based on an accelerator opening and a crank angle. The brake ECU detects a slip from a rotational speed of each wheel and performs ABS (Anti-lock Brake System) control, TRC (Traction Control) control, and ESC (Electronic Stability Control) control.

The power steering ECU detects a steering torque of the driver, drives a motor to provide steering assistance, and also rotationally drives a steering shaft to travel in the center of a traveling lane while an LKA (Lane Keeping Assist) system is operating. The airbag ECU analyzes a longitudinal acceleration/deceleration or a lateral deceleration acting on the vehicle and deploys a corresponding airbag. The transmission ECU opens and closes a valve through which transmission fluid passes according to an increase/decrease in engine speed, acceleration, vehicle speed, etc. due to an accelerator opening or a brake operation, and switches gears. In this way, the driving assistance is realized by the ECUs operating components of the vehicle 2 based on detection results of the external sensor 3 and the internal sensor 4.

The storage device 7 is a storage medium that stores vehicle data. The storage device 7 is configured with a memory or a hard disk, for example. The storage device 7 may be configured to include a volatile memory that temporarily stores vehicle data and a non-volatile memory that constitutes a ring buffer and stores vehicle data for a predetermined period.

The data storage device 1 is connected directly or indirectly to the external sensor 3 and the internal sensor 4, and causes the storage device 7 to store detection results of the external sensor 3 and the internal sensor 4. The data storage device 1 may be connected directly or indirectly to the vehicle system 6 and cause the storage device 7 to store an output value of the vehicle system 6. Hereinafter, at least one of the detection result of the external sensor 3, the detection result of the internal sensor 4, and the output value of the vehicle system is referred to as vehicle data.

The data storage device 1 includes a control unit 11 and an acquisition unit 12. The control unit 11 and the acquisition unit 12 are configured as an ECU, for example.

The control unit 11, in response to detection of a predetermined vehicle condition, causes the storage device 7 to store vehicle data corresponding to the vehicle condition. The predetermined vehicle condition can be arbitrarily set according to a predetermined event. For example, the vehicle condition may be set to a situation where it is highly possible for the driver to encounter an unsafe event.

The vehicle condition may be defined by, for example, a traveling state of the vehicle 2. The traveling state can include, for example, vehicle states related to starting and stopping of the vehicle, such as ignition ON and ignition OFF. The traveling state may include a state where at least one of speed, acceleration, deceleration, and lateral acceleration is equal to or greater than a predetermined value, a state where yaw rate is equal to or greater than a predetermined value, a starting state, a stopping state, and the like. The vehicle condition may be defined by a predetermined relationship between the vehicle 2 and a surrounding object. In this case, the vehicle condition can include a situation where it is highly possible for the vehicle 2 to come into contact with a surrounding object. The vehicle condition can include, for example, a situation where a TTC (Time To Collision) is equal to or less than a predetermined value. The vehicle condition may be defined by an operating state of the vehicle system 6, such as automatic brake activation or airbag deployment. The vehicle condition may be a situation where the vehicle system 6 is malfunctioning, for example, a situation where error information or the like is output from the vehicle system 6.

The predetermined vehicle condition may be detected by the control unit 11 or by another ECU or the like. Hereinafter, a case where the control unit 11 performs detections will be described as an example. The control unit 11 can detect the predetermined vehicle condition based on at least one of the detection results of the external sensor 3, the detection results of the internal sensor 4, and the output values of the vehicle system 6.

The control unit 11, in response to detection of the predetermined vehicle condition, determines vehicle data corresponding to the detected vehicle condition and causes the storage device 7 to store it. As a result, the storage device 7 stores corresponding vehicle data for each vehicle condition, which facilitates post-analysis.

The acquisition unit 12 acquires environmental information of a periphery of the vehicle 2. The acquisition unit 12 is connected to, for example, the environmental sensor 5 and receives a detection result of the environmental sensor 5. The acquisition unit 12 may also be configured to receive environmental information from a server (not shown) or the like.

The control unit 11 has a function of adjusting an amount of vehicle data to be stored in the storage device 7 based on the environmental information acquired by the acquisition unit 12. For example, the control unit 11 determines a sampling frequency of the vehicle data to be stored in the storage device 7, based on the environmental information acquired by the acquisition unit 12 and a pre-acquired relationship between the environmental information and the sampling frequency of the vehicle data. For example, the control unit 11 temporarily stores the vehicle data in a volatile memory of the storage device 7, and then samples and extracts the vehicle data stored in the volatile memory at a predetermined sampling frequency, and stores the extracted vehicle data in a non-volatile memory of the storage device 7. In other words, the adjustment of the data amount by the control unit 11 is not targeted at temporary storage in the volatile memory of the storage device 7, but at storage in the non-volatile memory that can be preserved for a certain period.

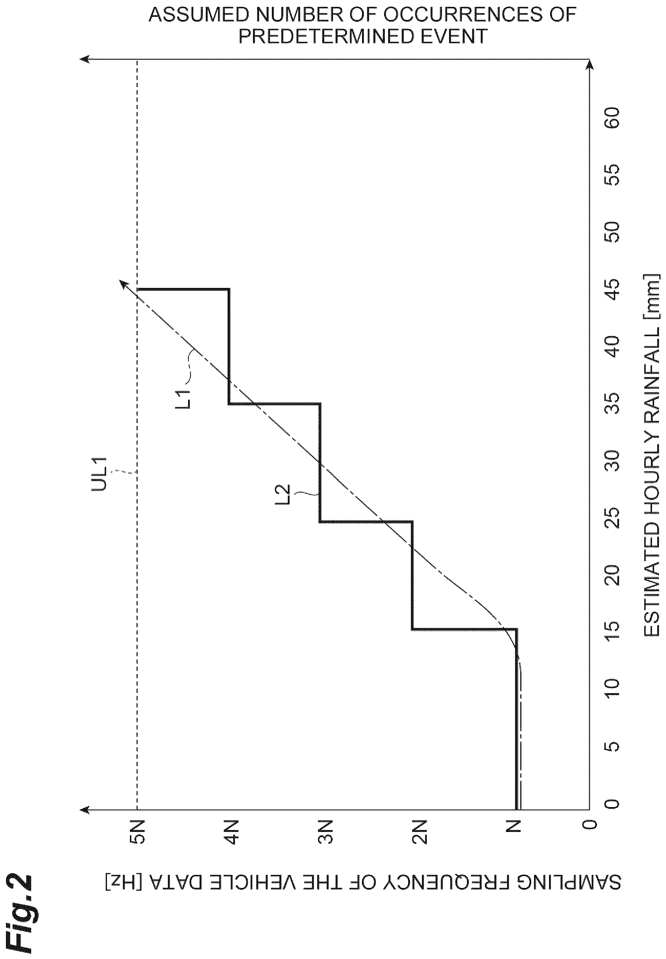

FIG. 2 is a graph showing a relationship between a sampling frequency of vehicle data and an estimated hourly rainfall, and a relationship between an assumed number of occurrences of a predetermined event and the estimated hourly rainfall. The horizontal axis represents the estimated hourly rainfall [mm], the left vertical axis represents the sampling frequency of the vehicle data [Hz] and corresponds to the solid line graph. The right vertical axis represents the assumed number of occurrences of a predetermined event and corresponds to the dot-dash line graph. The predetermined event here is an event where it is highly possible for the driver to encounter an unsafe event.

As shown in graph L1 of FIG. 2, the assumed number of occurrences of the predetermined event is estimated to be almost unchanged and at a constant value up to a predetermined amount of rainfall (e.g., 15 [mm]), and to increase in proportion to the amount of rainfall when it exceeds the predetermined amount of rainfall (e.g., 15 [mm]). This is because visibility is good with a certain amount of rain, but visibility deteriorates from the predetermined amount of rainfall. Also, this is because although drivers are accustomed to a certain amount of rainfall, they have less experience with rainfall exceeding the predetermined amount. Therefore, assuming the number of data to be acquired is N, as shown in graph L2 of FIG. 2, the sampling frequency is set to N [Hz] up to the predetermined amount of rainfall (e.g., 15 [mm]), and is set to be stepwise higher when it exceeds the predetermined amount of rainfall (e.g., 15 [mm]).

In the example of FIG. 2, the sampling frequency is set to 2N [Hz] in the range of rainfall from 15 [mm] to 25 [mm], set to 3N [Hz] in the range from 25 [mm] to 35 [mm], and set to 4N [Hz] in the range from 35 [mm] to 45 [mm]. The sampling frequency is set to 5N [Hz] for rainfall of 45 [mm] or more, and is not set to a higher value. In other words, a frequency upper limit UL1 is set for the sampling frequency.

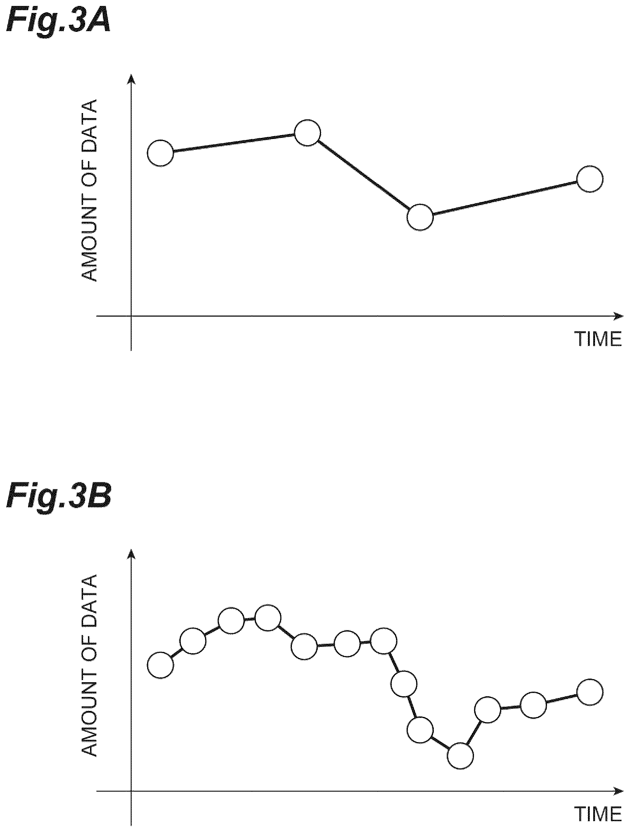

FIG. 3A is a graph showing a relationship between an amount of data acquired at a first sampling frequency and time, and FIG. 3B is a graph showing a relationship between an amount of data acquired at a second sampling frequency, which is higher than the first sampling frequency, and time. In FIG. 3A and FIG. 3B, the horizontal axis is time, and the vertical axis is the amount of data. In the figures, data points are indicated by circular shapes. As shown in FIG. 3A, the number of data acquired at the first sampling frequency is four. As shown in FIG. 3B, the number of data acquired at the second sampling frequency, which is higher than the first sampling frequency, is thirteen. In this way, by increasing the sampling frequency, the number of data increases, and the amount of data also increases. In other words, the data storage device 1 can acquire data in greater detail when the amount of rainfall is large.

As described above, the control unit 11, by controlling the sampling frequency based on the relationship between the sampling frequency of the vehicle data and the estimated hourly rainfall shown in FIG. 2, can increase the amount of stored vehicle data as shown in FIG. 3A and FIG. 3B in a situation where a predetermined event is likely to occur. Furthermore, adopting a configuration that increases the sampling frequency may put pressure on the capacity of the storage device 7. The control unit 11, by providing the frequency upper limit UL1, can avoid unexpected pressure on the capacity of the storage device 7.

### [Operation of Data Storage Device]

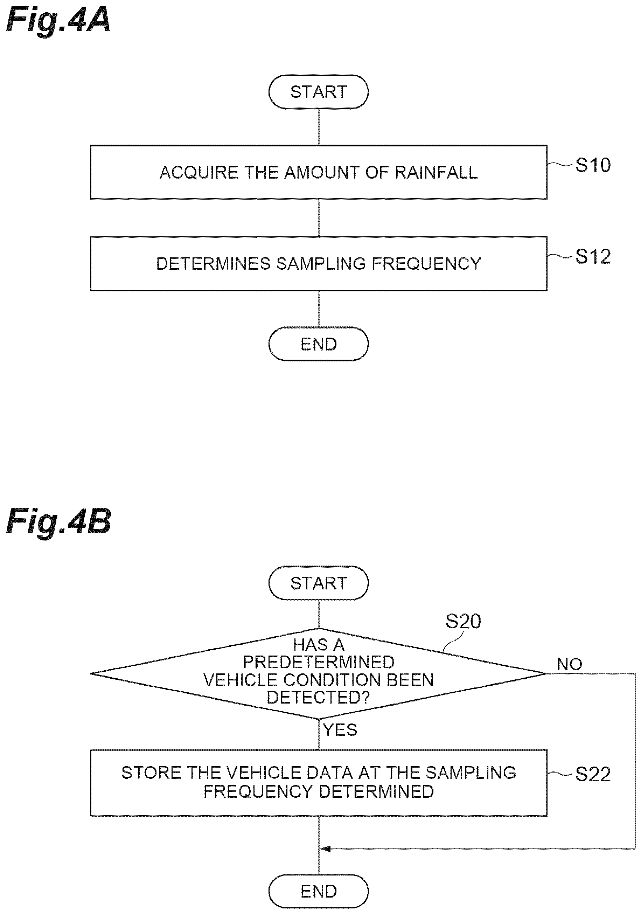

FIG. 4A is a flowchart showing an operation in which the data storage device determines the sampling frequency of the vehicle data. The flowchart shown in FIG. 4A is executed by the data storage device 1, for example, at a timing when an operation by an occupant is received.

As shown in FIG. 4A, the acquisition unit 12 of the data storage device 1 acquires an amount of rainfall in step S10. The acquisition unit 12 acquires the amount of rainfall based on, for example, a detection result of the environmental sensor 5. Subsequently, the control unit 11 of the data storage device 1 determines a sampling frequency in step S12. The control unit 11 determines the sampling frequency based on the amount of rainfall obtained in step S10 and the relationship between the sampling frequency of the vehicle data and the estimated hourly rainfall shown in FIG. 2. For example, if the amount of rainfall obtained in step S10 is 20 [mm], the control unit 11 sets the sampling frequency to 2N. When step S12 ends, the flowchart shown in FIG. 4A ends. The flowchart may be repeatedly executed from the beginning until an end operation is received. In this case, the data storage device 1 can dynamically change the sampling frequency.

FIG. 4B is a flowchart showing an operation in which the data storage device stores the vehicle data. The flowchart shown in FIG. 4B is executed by the data storage device 1 after the execution of the flowchart shown in FIG. 4A, for example, at a timing when an operation by an occupant is received.

As shown in FIG. 4B, the control unit 11 of the data storage device 1 determines whether a predetermined vehicle condition has been detected in step S20. The control unit 11 detects the predetermined vehicle condition based on at least one of the detection result of the external sensor 3, the detection result of the internal sensor 4, and the output value of the vehicle system 6. If the predetermined vehicle condition is detected (YES in step S20), the control unit 11 stores the vehicle data in the non-volatile memory of the storage device 7 at the sampling frequency determined in the flowchart shown in FIG. 4A, in step S22.

When step S22 ends, or when the predetermined vehicle condition is not detected (NO in step S20), the flowchart shown in FIG. 4B ends. The flowchart may be repeatedly executed from the beginning until an end operation is received. In this case, the data storage device 1 can dynamically store the vehicle data.

### [Summary of Embodiments]

According to the data storage device 1, environmental information of a periphery of the vehicle 2 is acquired. Then, a sampling frequency of the vehicle data to be stored in the storage device 7 is determined based on the acquired environmental information and a pre-acquired relationship between the environmental information and the sampling frequency. Then, in response to detection of a predetermined vehicle condition, the vehicle data sampled at the determined sampling frequency is stored in the storage device. As described above, since the data storage device 1 can change the sampling frequency of the vehicle data according to the environmental information, the amount of stored vehicle data can be adjusted according to the environment around the vehicle 2.

The data storage device 1 can increase the amount of stored vehicle data as the environment becomes more detrimental to the travel and driving of the vehicle 2, that is, as the situation becomes more likely for the driver to encounter an unsafe event. Therefore, the data storage device 1 can improve event analyzability compared to a device that stores vehicle data uniformly.

### [Modification]

Although the exemplary embodiments have been described above, various omissions, substitutions, and changes may be made without being limited to the exemplary embodiments described above.

### [Handling of Other Environmental Information]

In the embodiment described above, the case where the environmental information is the amount of rainfall was described in detail, but the same method can be adopted when the environmental information is an amount of snowfall, an amount of sunlight, an intensity of glare, or a degree of road surface freezing as when the environmental information is the amount of rainfall. In other words, a relationship between the sampling frequency and at least one of an amount of snowfall, an amount of sunlight, an intensity of glare, and a degree of road surface freezing should be prepared, similar to FIG. 2.

### [Control of Sampling Frequency]

Although the data storage device 1 increases the sampling frequency stepwise when the amount of rainfall becomes 15 [mm] or more in the graph L2 shown in FIG. 2, the sampling frequency may be increased proportionally, that is, linearly. Further, the data storage device 1 may change the sampling frequency by combining a time parameter with the environmental information. For example, the data storage device 1 may acquire a larger amount of data when a certain amount of rainfall continues for more than a predetermined time, because the driver's attention decreases. Alternatively, the data storage device 1 may change the sampling frequency by combining traffic information or driving information with the environmental information. For example, the data storage device 1 may change the sampling frequency to acquire a larger amount of data when entering an area with frequent traffic troubles, when entering an intersection, when entering an area where a certain amount of traffic continues for more than a predetermined time, when the continuous driving time exceeds a predetermined time, or when the driver is looking away.

### [Other Examples of Increasing Data Amount]

The method of changing the sampling frequency according to environmental information such as the amount of rainfall is a method of adjusting the data amount by controlling the number of data acquisitions according to the environmental information. In contrast, the data amount may be increased by acquiring the data itself in greater detail. The method of acquiring the data itself in greater detail may be adopted in combination with the method of increasing the data amount by increasing the number of data acquisitions, or may be adopted alone. The method of acquiring the data itself in greater detail is adopted, for example, when the vehicle data is image data. The image data is acquired by the external sensor 3 and stored in the storage device 7 directly or via the vehicle system 6. An example of such image data is video from a front camera, or original image data for a bird's-eye view image displayed during parking assistance.

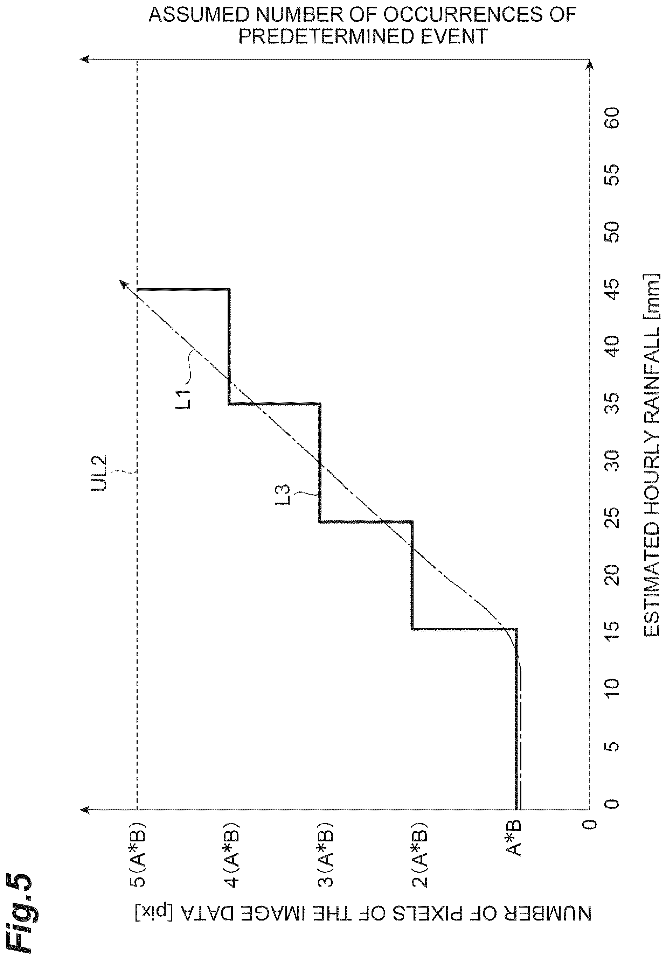

FIG. 5 is a graph showing a relationship between a number of pixels of image data and an estimated hourly rainfall, and a relationship between an assumed number of occurrences of a predetermined event and the estimated hourly rainfall. The horizontal axis represents the estimated hourly rainfall [mm], the left vertical axis represents the number of pixels of the image data [pix] and corresponds to the solid line graph. The right vertical axis represents the assumed number of occurrences of a predetermined event and corresponds to the dot-dash line graph. The predetermined event here is an event where it is highly possible for the driver to encounter an unsafe event.

As shown in graph L3 of FIG. 5, the assumed number of occurrences of the predetermined event is estimated to be unchanged and at a constant number up to a predetermined amount of rainfall (e.g., 15 [mm]), and to increase in proportion to the amount of rainfall when it exceeds the predetermined amount of rainfall (e.g., 15 [mm]). Therefore, as shown in graph L3 of FIG. 5, the number of pixels is set to A*B [pix] up to the predetermined amount of rainfall (e.g., 15 [mm]), and is set to be stepwise higher when it exceeds the predetermined amount of rainfall (e.g., 15 [mm]).

In the example of FIG. 5, the number of pixels is set to 2(A*B) [pix] in the range of rainfall from 15 [mm] to 25 [mm], set to 3(A*B) [pix] in the range from 25 [mm] to 35 [mm], and set to 4(A*B) [pix] in the range from 35 [mm] to 45 [mm]. The number of pixels is set to 5(A*B) [pix] for rainfall of 45 [mm] or more, and is not set to a higher value. In other words, a pixel number upper limit UL2 is set for the number of pixels.

The control unit 11 can operate to increase the amount of stored image data in a situation where a predetermined event is likely to occur, by controlling the number of pixels of the image data based on the relationship between the number of pixels of the image data and the estimated hourly rainfall shown in FIG. 5. Furthermore, adopting a configuration that increases the number of pixels may put pressure on the capacity of the storage device 7. The control unit 11, by providing the pixel number upper limit UL2, can avoid unexpected pressure on the capacity of the storage device 7.

### [Example of Setting Allowable Number of Storage Operations]

The data storage device 1 may set an allowable number of storage operations in a predetermined period for each type of vehicle condition. The allowable number of storage operations defines how many sets of a certain vehicle condition are to be stored in the non-volatile memory of the storage device 7. The allowable number of storage operations can be arbitrarily set based on an assumed frequency of occurrence of the vehicle condition and a period for which it is desired to be stored and held (predetermined period). For example, if the assumed frequency of occurrence is five times a week and the predetermined period is one week, the allowable number of storage operations will be five. The type of vehicle condition is defined to distinguish various vehicle conditions, such as vehicle states related to starting and stopping of the vehicle like ignition ON and ignition OFF, a state where at least one of speed, acceleration, deceleration, and lateral acceleration is equal to or greater than a predetermined value, a state where a yaw rate is equal to or greater than a predetermined value, a starting state, a stopping state, a situation where TTC is equal to or less than a predetermined value, an operating state of the vehicle system 6 such as automatic brake activation or airbag deployment, a situation where error information or the like is output from the vehicle system 6, and the like.

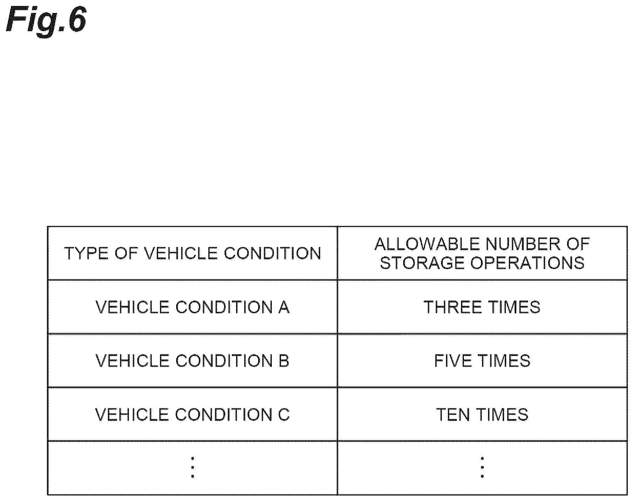

FIG. 6 is a table showing a relationship between a type of vehicle condition and an allowable number of storage operations. As shown in FIG. 6, an allowable number of storage operations is associated with each type of vehicle condition, such as 3 times for vehicle condition A, 5 times for vehicle condition B, and 10 times for vehicle condition C. The control unit 11 refers to the table shown in FIG. 6 and, in response to detection of a vehicle condition, causes the non-volatile memory of the storage device 7 to store the vehicle data when a number of storage operations related to the vehicle condition is less than the allowable number of storage operations, and does not cause the non-volatile memory of the storage device 7 to store the vehicle data when the number of storage operations related to the vehicle condition is greater than or equal to the allowable number of storage operations. This allows the data storage device 1 to avoid unexpected pressure on the capacity of the storage device 7.

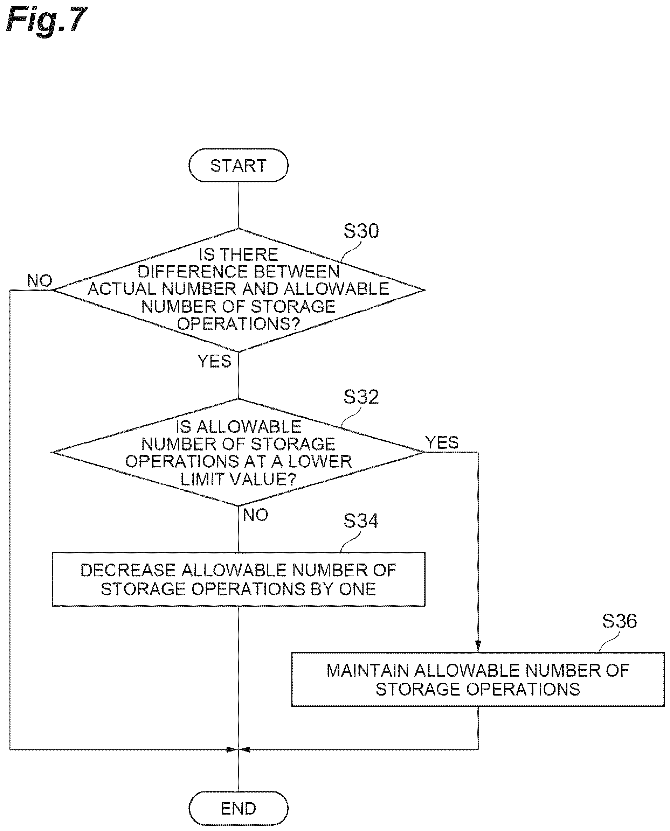

The data storage device 1 may adjust the allowable number of storage operations according to actual results. FIG. 7 is a flowchart showing an operation for changing the allowable number of storage operations. The flowchart shown in FIG. 7 is executed by the data storage device 1 for each type of vehicle condition when a predetermined period has elapsed.

As shown in FIG. 7, the control unit 11 of the data storage device 1 determines whether there is a difference between the actual number of storage operations in a predetermined period and the allowable number of storage operations, in step S30. If it is determined that there is a difference between the actual number of storage operations in the predetermined period and the allowable number of storage operations (YES in step S30), the control unit 11 determines whether the allowable number of storage operations is at a lower limit value, in step S32. The lower limit value is set in advance for each vehicle condition, for example. A common value may be set for all vehicle conditions as the lower limit value.

If it is determined that the allowable number of storage operations is not at the lower limit value (NO in step S32), the control unit 11 decreases the allowable number of storage operations by one, in step S34. If it is determined that the allowable number of storage operations is at the lower limit value (YES in step S32), the control unit 11 maintains the allowable number of storage operations, in step S36.

If it is determined that there is no difference between the actual number of storage operations in the predetermined period and the allowable number of storage operations (NO in step S30), or when step S34 ends, or when step S36 ends, the flowchart shown in FIG. 7 ends. By executing the flowchart shown in FIG. 7, the data storage device 1 can increase the amount of stored vehicle data as the situation becomes more likely for the driver to encounter an unsafe event, and at the same time, can stop unnecessary storage according to the driver's tendency, thus achieving recording that balances the quality and capacity of the vehicle data.

### [Data Storage System]

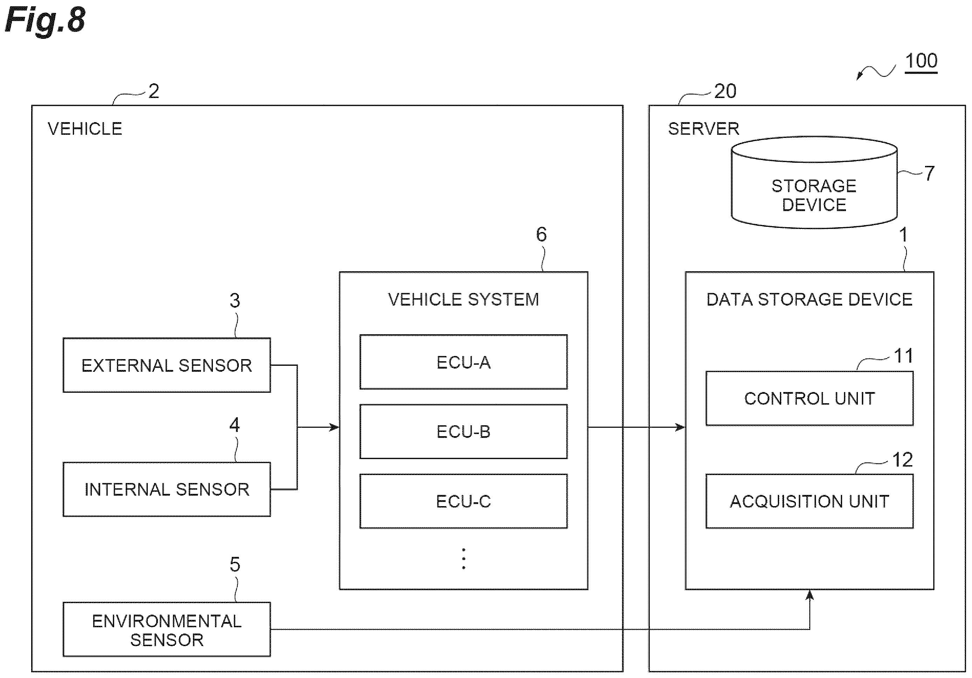

The data storage device 1 may be provided as a data storage system. FIG. 8 is a block diagram showing an example of a configuration of a data storage system according to an embodiment. As shown in FIG. 8, a data storage system 100 is applied to an environment including a vehicle 2 and a server 20. The data storage system 100 includes the data storage device 1. The vehicle 2 differs from the embodiment described above in that it does not include the data storage device 1 and the storage device 7, and is otherwise the same as the embodiment described above. The server 20 is configured to be communicable with the vehicle 2 and is a general-purpose computer including a CPU, ROM, RAM, and the like. The server 20 includes the data storage device 1 and the storage device 7. In this way, the data storage device 1 and the storage device 7 described in the embodiment above may be provided not only on the vehicle 2 but also on a device communicable with the vehicle 2, such as the server 20. Also, only a part of the data storage device 1 and the storage device 7 may be provided on the server 20. In any case, the data storage system 100 provides the same effects as the data storage device 1.

### [Program]

The various functions of the data storage device 1 may be provided as a program. The program may be provided stored in, for example, a computer-readable recording medium or the like.

The present disclosure includes aspects shown in the following clauses.

### [Clause 1]

A data storage device comprising:
a control unit configured to, in response to detection of a predetermined vehicle condition, cause a storage device to store vehicle data corresponding to the vehicle condition; and
an acquisition unit configured to acquire environmental information of a periphery of a vehicle, wherein the control unit is configured to:
determine a sampling frequency of the vehicle data to be stored in the storage device, based on the environmental information acquired by the acquisition unit and a pre-acquired relationship between the environmental information and the sampling frequency of the vehicle data; and
cause the storage device to store the vehicle data sampled at the determined sampling frequency.

### [Clause 2]

The data storage device according to clause 1, wherein the environmental information comprises at least one of an amount of rainfall, an amount of snowfall, an amount of sunlight, an intensity of glare, and a degree of road surface freezing, and
the pre-acquired relationship between the environmental information and the sampling frequency of the vehicle data is a relationship in which the sampling frequency of the vehicle data increases as the environmental information becomes larger.

### [Clause 3]

The data storage device according to clause 1, wherein the environmental information comprises at least one of an amount of rainfall, an amount of snowfall, an amount of sunlight, an intensity of glare, and a degree of road surface freezing, and
the pre-acquired relationship between the environmental information and the sampling frequency of the vehicle data is a relationship in which the sampling frequency of the vehicle data increases stepwise according to a magnitude of the environmental information.

### [Clause 4]

The data storage device according to any one of clauses 1 to 3, wherein the control unit is configured to set an upper limit for the sampling frequency of the vehicle data.

### [Clause 5]

The data storage device according to any one of clauses 1 to 4, wherein the vehicle data comprises image data, and the control unit is further configured to:
determine a number of pixels of the image data to be stored in the storage device, based on the environmental information acquired by the acquisition unit and a pre-acquired relationship between the environmental information and the number of pixels of the image data; and
cause the storage device to store the image data converted to the determined number of pixels.

### [Clause 6]

The data storage device according to any one of clauses 1 to 5, wherein the control unit is further configured to:
set an allowable number of storage operations for a predetermined period for each type of the vehicle condition;
in response to detection of the vehicle condition, cause the storage device to store the vehicle data when a number of storage operations related to the vehicle condition is less than the allowable number of storage operations, and not cause the storage device to store the vehicle data when the number of storage operations related to the vehicle condition is greater than or equal to the allowable number of storage operations;
acquire an actual result value of the number of storage operations in the predetermined period; and
modify the allowable number of storage operations so as to approach the actual result value.

### [Clause 7]

A vehicle comprising:
a control unit configured to, in response to detection of a predetermined vehicle condition, cause a storage device to store vehicle data corresponding to the vehicle condition; and
an acquisition unit configured to acquire environmental information of a periphery of the vehicle, wherein the control unit is configured to:
   determine a sampling frequency of the vehicle data to be stored in the storage device, based on the environmental information acquired by the acquisition unit and a pre-acquired relationship between the environmental information and the sampling frequency of the vehicle data; and
   cause the storage device to store the vehicle data sampled at the determined sampling frequency.

### [Clause 8]

A data storage system comprising:
a control unit configured to, in response to detection of a predetermined vehicle condition, cause a storage device to store vehicle data corresponding to the vehicle condition; and
an acquisition unit configured to acquire environmental information of a periphery of a vehicle, wherein the control unit is configured to:
   determine a sampling frequency of the vehicle data to be stored in the storage device, based on the environmental information acquired by the acquisition unit and a pre-acquired relationship between the environmental information and the sampling frequency of the vehicle data; and
   cause the storage device to store the vehicle data sampled at the determined sampling frequency.

### [Clause 9]

A program executed by a control unit in a data storage device, the data storage device comprising:
the control unit, configured to, in response to detection of a predetermined vehicle condition, cause a storage device to store vehicle data corresponding to the vehicle condition; and
an acquisition unit, configured to acquire environmental information of a periphery of a vehicle,
the program causing the control unit to execute steps of:
   determining a sampling frequency of the vehicle data to be stored in the storage device, based on the environmental information acquired by the acquisition unit and a pre-acquired relationship between the environmental information and the sampling frequency of the vehicle data; and
   causing the storage device to store the vehicle data sampled at the determined sampling frequency.

## Claims

1. A data storage device (1) comprising:
a control unit (11) configured to, in response to detection of a predetermined vehicle condition, cause a storage device (7) to store vehicle data corresponding to the vehicle condition; and
an acquisition unit (12) configured to acquire environmental information of a periphery of a vehicle (2), wherein the control unit is configured to:
determine a sampling frequency of the vehicle data to be stored in the storage device (7), based on the environmental information acquired by the acquisition unit (12) and a pre-acquired relationship between the environmental information and the sampling frequency of the vehicle data; and
cause the storage device (7) to store the vehicle data sampled at the determined sampling frequency.

2. The data storage device (1) according to claim 1, wherein the environmental information comprises at least one of an amount of rainfall, an amount of snowfall, an amount of sunlight, an intensity of glare, and a degree of road surface freezing, and
the pre-acquired relationship between the environmental information and the sampling frequency of the vehicle data is a relationship in which the sampling frequency of the vehicle data increases as the environmental information becomes larger.

3. The data storage device (1) according to claim 1, wherein the environmental information comprises at least one of an amount of rainfall, an amount of snowfall, an amount of sunlight, an intensity of glare, and a degree of road surface freezing, and
the pre-acquired relationship between the environmental information and the sampling frequency of the vehicle data is a relationship in which the sampling frequency of the vehicle data increases stepwise according to a magnitude of the environmental information.

4. The data storage device (1) according to any one of claims 1 to 3, wherein the control unit (11) is configured to set an upper limit for the sampling frequency of the vehicle data.

5. The data storage device (1) according to any one of claims 1 to 4, wherein the vehicle data comprises image data, and the control unit (11) is further configured to:
determine a number of pixels of the image data to be stored in the storage device (7), based on the environmental information acquired by the acquisition unit and a pre-acquired relationship between the environmental information and the number of pixels of the image data; and
cause the storage device (7) to store the image data converted to the determined number of pixels.

6. The data storage device (1) according to any one of claims 1 to 5, wherein the control unit (11) is further configured to:
set an allowable number of storage operations for a predetermined period for each type of the vehicle condition;
in response to detection of the vehicle condition, cause the storage device (7) to store the vehicle data when a number of storage operations related to the vehicle condition is less than the allowable number of storage operations, and not cause the storage device (7) to store the vehicle data when the number of storage operations related to the vehicle condition is greater than or equal to the allowable number of storage operations;
acquire an actual result value of the number of storage operations in the predetermined period; and
modify the allowable number of storage operations so as to approach the actual result value.

7. A vehicle (2) comprising:
a control unit (11) configured to, in response to detection of a predetermined vehicle condition, cause a storage device (7) to store vehicle data corresponding to the vehicle condition; and
an acquisition unit (12) configured to acquire environmental information of a periphery of the vehicle (2), wherein the control unit (11) is configured to:
determine a sampling frequency of the vehicle data to be stored in the storage device (7), based on the environmental information acquired by the acquisition unit (12) and a pre-acquired relationship between the environmental information and the sampling frequency of the vehicle data; and
cause the storage device (7) to store the vehicle data sampled at the determined sampling frequency.

8. A data storage system (100) comprising:
a control unit (11) configured to, in response to detection of a predetermined vehicle condition, cause a storage device (7) to store vehicle data corresponding to the vehicle condition; and
an acquisition unit (12) configured to acquire environmental information of a periphery of a vehicle (2), wherein the control unit (11) is configured to:
determine a sampling frequency of the vehicle data to be stored in the storage device (7), based on the environmental information acquired by the acquisition unit (12) and a pre-acquired relationship between the environmental information and the sampling frequency of the vehicle data; and
cause the storage device (7) to store the vehicle data sampled at the determined sampling frequency.

9. A program executed by a control unit (11) in a data storage device (1), the data storage device (1) comprising:
the control unit (11), configured to, in response to detection of a predetermined vehicle condition, cause a storage device (7) to store vehicle data corresponding to the vehicle condition; and
an acquisition unit (12), configured to acquire environmental information of a periphery of a vehicle (2),
the program causing the control unit (11) to execute steps of:
determining a sampling frequency of the vehicle data to be stored in the storage device (7), based on the environmental information acquired by the acquisition unit (12) and a pre-acquired relationship between the environmental information and the sampling frequency of the vehicle data; and
causing the storage device (7) to store the vehicle data sampled at the determined sampling frequency.
